# EUROPÄISCHE PATENTSCHRIFT

(11) **EP 0 581 931 B1**
(45) Veröffentlichungstag und Bekanntmachung des Hinweises auf die Patenterteilung: **29.05.1996**
(21) Anmeldenummer: 93903813.9
(22) Anmeldetag: 18.02.1993
(51) Int. Cl.: G03B 1/22, G03B 1/48

(54) **FILMTRANSPORTVORRICHTUNG**
FILM-WINDING DEVICE
DISPOSITIF D'AVANCEMENT DE PELLICULE

(30) Priorität: 20.02.1992 DE 4205411
(43) Veröffentlichungstag der Anmeldung: 09.02.1994
(73) Patentinhaber: ARNOLD & RICHTER CINE TECHNIK GMBH & CO. BETRIEBS KG., D-80799 München (DE)
(72) Erfinder: KOPPETZ, Michael, D-8000 München 80 (DE); GROSSER, Claus, D-8050 Freising (DE)
(74) Vertreter: Ninnemann, Detlef, Dipl.-Ing.
(86) Internationale Anmeldenummer: DE9300150
(87) Internationale Veröffentlichungsnummer: WO9317365

(56) Entgegenhaltungen:
- EP-A- 0 272 607
- EP-A- 0 454 283
- US-A- 2 101 469
- US-A- 2 144 277

## Beschreibung

Die Erfindung betrifft eine Filmtransportvorrichtung gemäß dem Oberbegriff des Anspruchs 1.

Zum schrittweisen Transport eines Laufbildfilms werden Filmschaltwerke verwendet, beispielsweise in Form von Greifergetrieben. Ein derartiges Greifergetriebe wird über eine Antriebswelle kontinuierlich von einem Elektromotor angetrieben, wobei ein Gelenk- oder Kurvenscheibengetriebe die rotatorische Bewegung des Elektromotors in translatorische Bewegungen umwandelt, die von Greiferelementen über die Perforation des Films auf diesen übertragen werden. Der in einem Filmkanal geführte Film wird auf diese Weise intermittierend transportiert.

Für einen präzisen Filmtransport eines Greifergetriebes ist es erforderlich, daß die Greiferelemente (Transportgreifer oder Sperrgreifer) ständig im Eingriff sind. Da es aber üblicherweise möglich sein muß, den Film in einer geschlossenen Schleife ein- oder auszulegen, muß das Greifergetriebe relativ zum Filmkanal verschiebbar sein. Zusätzlich sollte der Filmkanal aufweitbar ausgebildet sein, so daß er bei Bedarf zugänglich ist.

Bekannt sind Filmtransportvorrichtungen, z.B aus EP-A 0 272 607 oder EP-A-0 454 283, deren Greiferelemente sich während des Schaltzyklus in einem Punkt außer Eingriff mit dem Film befinden. Eine Filmkanalhälfte ist dabei schwenkbar ausgebildet, so daß der Filmkanal zugänglich und der Film als geschlossene Schleife einsetzbar bzw. entnehmbar ist.

Diese bekannte Lösung hat jedoch den Nachteil, daß sich die Greiferelemente nicht ständig im Eingriff mit dem Film befinden.

Eine andere bekannte Lösung besteht darin, die Filmtransportvorrichtung derart auszubilden, daß eines der Greiferelemente relativ zum Getriebe außer Eingriff verschiebbar ist, während sich das andere Greiferelement bereits außer Eingriff befindet. Die Zugänglichkeit des Filmkanals ist dabei durch eine entfernbare Filmkanalhälfte realisiert.

Diese Filmtransportvorrichtungen erfordern eine umständlich Bedienung und einen erheblichen konstruktiven Aufwand, um eine präzise Zuordnung des beweglichen Greiferelements zum Getriebe zu gewährleisten.

Ferner sind Filmtransportvorrichtungen bekannt, z. B. aus der US-A-2 144 277 oder der US-A-2 101 469, bei denen eine Filmkanalhälfte fest mit dem Greifergetriebe verbunden ist und beide relativ zur anderen Filmkanalhälfte verschiebbar sind, so daß die Greiferelemente außer Eingriff gebracht werden können. Der Antriebsmotor ist dabei fest mit der Antriebsachse des Greifergetriebes verbunden und muß daher zusammen mit dem Greifergetriebe und der daran befestigten Filmkanalhälfte verschoben werden.

Die Motorverschiebung beansprucht jedoch viel Platz und erfordert wegen der Masse des Motors eine besonders stabil ausgelegte Führungseinrichtung zur gemeinsamen Verschiebung von Greifergetriebe und Motor. Zusätzliche wird eine Transmission für den Lageausgleich des Motors erforderlich, sofern von diesem auch andere Elemente der Kamera, wie beispielsweise die Blende, angetrieben werden.

Schließlich ist es bekannt, den Antriebsmotor der zuvor beschriebenen Filmtransportvorrichtung über eine zusätzliche Transmission mit dem Greifergetriebe zu verbinden, die den Versatz bei Verschiebung des Getriebes ausgleicht.

Da die Antriebswelle des Greifergetriebes aber nicht starr mit dem Motor verbunden ist und das Greifergetriebe einen ungleichmäßigen Drehmomentenbedarf hat, ist eine Regelung des Filmtransports bei höheren Geschwindigkeiten mitunter problematisch.

Der vorliegenden Erfindung liegt die Aufgabe zugrunde, eine Filmtransportvorrichtung mit einem relativ zum Filmkanal verschiebbaren Filmschaltwerk und mit einem durch die Verschiebung zugänglich werdenden Filmkanal zu schaffen, die einen hochpräzisen Filmtransport und dessen optimale Regelung, insbesondere bei hohen Filmtransportgeschwindigkeiten sicherstellt und gleichzeitig bei platz- und gewichtssparender Bauweise sowohl einen einfachen Aufbau aufweist als auch eine einfach durchführbare Verschiebung des Filmschaltwerks ermöglicht.

Diese Aufgabe wird durch die Merkmale des Anspruchs 1 gelöst.

Die erfindungsgemäße Lösung gewährleistet einen hochpräzisen, auch bei hohen Filmtransportgeschwindigkeiten optimal regelbaren Filmtransport, da sie in der Betriebsstellung einen ständigen Eingriff des Filmschaltwerks realisiert und die Motorwelle des Antriebsmotors und die Antriebswelle des Filmschaltwerks über eine Kupplung drehstarr verbunden sind, so daß trotz des ungleichmäßigen Drehmomentenbedarfs eines Greifergetriebes eine optimale Regelung auch bei höheren Geschwindigkeiten sichergestellt ist.

Durch eine getrennte Verschiebbarkeit des Filmschaltwerks ergibt sich zudem eine platz- und gewichtssparende Bauweise, da der Antriebsmotor an einem Ort fest installierbar ist und eine der Verschiebung des Filmschaltwerks dienende Führungseinrichtung demzufolge weniger massiv und somit leichter ausgebildet werden kann. Gleichzeitig ermöglicht die erfindungsgemäße Lösung ohne aufwendige konstruktive Maßnahmen eine einfach durchführbare Verschiebung des Filmschaltwerks.

Eine vorteilhafte Ausgestaltung der erfindungsgemäßen Lösung ist dadurch gekennzeichnet, daß die Kupplung aus mindestens einer Scheibe und einer Gegenscheibe besteht, die formschlüssig miteinander verbindbar und in bezug auf die Motorwelle radial trennbar sind.

Diese Ausgestaltung ermöglicht auf besonders einfache Weise eine radiale Trennung der Antriebswelle des Filmschaltwerks von der Motorwelle des Antriebsmotors und somit eine vom Antriebsmotor getrennte Verschiebung des Filmschaltwerks zur Erweiterung des Filmkanals.

Eine weitere vorteilhafte Ausgestaltung der erfindungsgemäßen Lösung besteht darin, daß die Kupplung aus zwei fluchtenden, synchron drehenden und jeweils mindestens eine Nut aufweisenden Scheiben sowie einer mit diesen Scheiben mittels eines Steges verbindbaren und mit der Antriebswelle des Filmschaltwerks verbundenen Gegenscheibe besteht, wobei die eine Scheibe mit der Motorwelle verbunden und die andere Scheibe in Verschieberichtung des Filmschaltwerks auf einer parallel zur Motorwelle verlaufenden Drehachse gelagert ist.

Diese vorteilhafte Ausgestaltung führt zu einem großen Verschiebebereich des Filmschaltwerks bei gleichzeitig kompakter Kupplung, so daß der Platzbedarf einer derart ausgebildeten Filmtransportvorrichtung besonders gering ist. Ferner bleibt die Phasenbeziehung zwischen dem Antriebsmotor und dem Filmschaltwerk auch bei dessen Verschiebung erhalten. Dies ist insbesondere dann wichtig, wenn zum Beispiel der Antriebsmotor zusätzlich eine Blende antreibt.

Eine weitere vorteilhafte Ausgestaltung der erfindungsgemäßen Lösung besteht darin, daß die Scheiben jeweils eine Stirnradverzahnung aufweisen und durch einen Zahnriemen miteinander gekoppelt sind.

Durch den Einsatz eines Zahnriemens wird ein gleichmäßiger und geräuscharmer Lauf der miteinander gekoppelten Scheiben erreicht. Zudem kann ein flexibel ausgebildeter Zahnriemen eine beispielsweise durch Temperaturänderung hervorgerufene radiale und/oder axiale Verschiebung der Motorwelle und/oder der parallel dazu verlaufenden Drehachse ausgleichen.

Eine weitere vorteilhafte Ausgestaltung der erfindungsgemäßen Lösung besteht darin, daß die Scheibe bzw. Scheiben und/oder die Gegenscheibe mindestens eine Nut und mindestens einen darin formschlüssig einsetzbaren Steg aufweisen, wobei der mindestens eine Steg und die mindestens eine Nut jeweils einen rechteckigen Querschnitt aufweisen.

Durch diese Ausgestaltung kann zwischen der Motorwelle und der Antriebswelle des Filmschaltwerks ein axialer Ausgleich erfolgen, wobei das Filmschaltwerk drehstarr mit der Motorwelle verbunden bleibt.

Weitere vorteilhafte Ausgestaltungen der Erfindung sind in den Unteransprüchen gekennzeichnet. Die Erfindung wird nachstehend anhand der in der Zeichnung dargestellten Ausführungsbeispiele näher erläutert. Es zeigen:
- Figur 1: eine schematische Darstellung einer Filmtransportvorrichtung mit einem verschiebbaren Greiferschaltwerk;
- Figur 2: eine Seitenansicht der in Figur 1 dargestellten Filmtransportvorrichtung in Verschieberichtung des Greiferschaltwerks;
- Figur 3: eine Seitenansicht einer schematisch dargestellten Kupplung, bestehend aus einer Scheibe und einer radial verschiebbaren Gegenscheibe;
- Figur 4: eine Draufsicht einer anderen schematisch dargestellten Kupplung mit einem aus mehreren Zahnrädern bestehenden Synchrongetriebe;
- Figur 5: eine perspektivische Darstellung einer schematisch dargestellten Kupplung mit einer in Nuten verschiebbaren Gegenscheibe;
- Figur 6: eine Seitenansicht der Kupplung gemäß Figur 5 mit einer angedeuteten Verschiebung der Gegenscheibe;
- Figur 7: eine Draufsicht einer weiteren Kupplung mit über ein Zahnrad gekoppelten Scheiben und
- Figur 8: eine schematische Darstellung einer Filmtransportvorrichtung in einer Laufbildkamera.

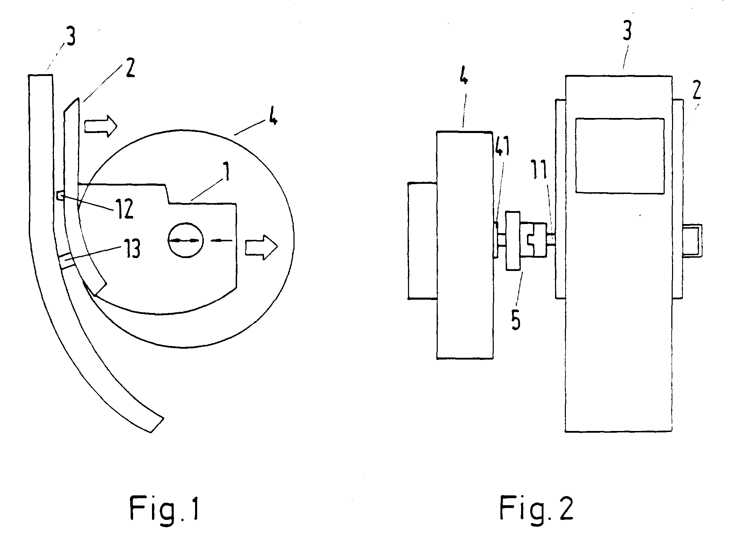

Figur 1 zeigt eine Filmtransportvorrichtung mit einem Antriebsmotor 4, einem Filmschaltwerk 1 in Form eines Greifergetriebes und zwei einen Filmkanal bildenden Filmkufen 2 und 3. Das Greifergetriebe 1 ist fest mit der hinteren Filmkufe 2 verbunden. Beide lassen sich relativ zur vorderen Filmkufe 3 translatorisch verschieben. Der Antriebsmotor 4, der mit einem nicht näher dargestellten Gehäuse fest verbunden ist, behält bei der Verschiebung des Greifergetriebes 1 seine Lage.

Die Greiferelemente 12 und 13 des Greifergetriebes 1 werden durch die gemeinsame Verschiebung von Greifergetriebe 1 und Filmkufe 2 außer Eingriff mit einem im Filmkanal angeordneten, nicht näher dargestellten Film gebracht. Gleichzeitig erfolgt dabei eine Aufweitung des Filmkanals, so daß dieser zum Ein- oder Auslegen eines Films zugänglich ist.

In der Betriebsstellung des Greifergetriebes 1 befindet sich dagegen mindestens eines der Greiferelemente 12 oder 13 im Eingriff mit der Perforation des Films. Dieser ständige Eingriff mindestens eines Greiferelementes ist Voraussetzung für einen präzisen Filmtransport mit möglichst geringer Bildstandsabweichung.

In Figur 2 ist eine Seitenansicht der in Figur 1 dargestellten Filmtransportvorrichtung in Verschieberichtung des Greifergetriebes 1 gezeigt. Die Motorwelle 41 des Antriebsmotors 4 ist über eine Kupplung 5 drehstarr mit der Antriebswelle 11 des Greifergetriebes verbunden.

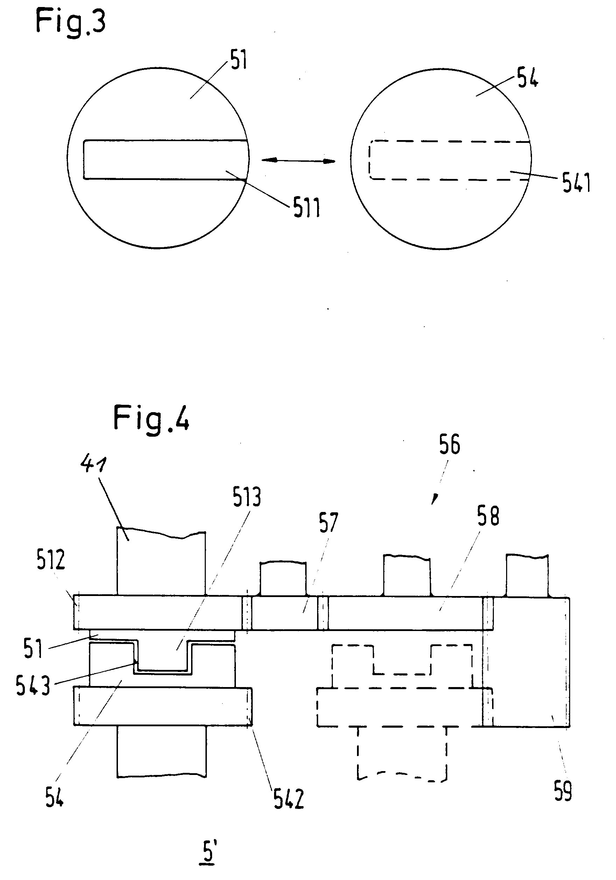

In einer einfachen Ausführungsform besteht die Kupplung, wie in Figur 3 gezeigt, aus einer eine Nut 511 aufweisenden Scheibe 51, die in der Betriebsstellung des Greifergetriebes mit einer einen Steg 541 aufweisenden Gegenscheibe 54 drehstarr verbunden ist. Selbstverständlich kann auch umgekehrt die Gegenscheibe 54 mit einer Nut und die Scheibe 51 mit einem in die Nut formschlüssig einsetzbaren Steg versehen sein. Die Verschieberichtung des hier nicht dargestellten Greifergetriebes ist durch den Doppelpfeil angezeigt.

Bei dieser Ausführungsform ist die durch den Mittelpunkt der kreisförmigen Scheibe 51 verlaufende Nut 51 nur in einer radialen Richtung offen. Der durch den Mittelpunkt der Gegenscheibe 54 verlaufende Steg 541 ist entsprechend ausgebildet, so daß er sich nicht über deren gesamten Durchmesser erstreckt. Durch diese Ausgestaltung ist sichergestellt, daß die Phasenbeziehung zwischen der Motorwelle und der Antriebswelle des Filmschaltwerks stets erhalten bleibt.

Ein anderes Ausführungsbeispiel einer Kupplung 5' ist in Figur 4 dargestellt. Die Motorwelle 41 treibt über die Scheibe 51 zusätzlich ein aus mehreren Zahnrädern bestehendes Synchrongetriebe 56 an. Die Scheibe 51 ist zu diesem Zweck mit einer Stirnradverzahnung 512 versehen, die mit dem Zahnrad 57 des Synchrongetriebes kämmt. Dieses Zahnrad treibt über ein Zwischenzahnrad 58 ein weiteres Zahnrad 59 an, das den gleichen Teilkreisdurchmesser wie das Zahnrad 57 aufweist. Das Zahnrad 59 ist ferner so breit ausgebildet, daß dieses in verschobener Lage des Filmschaltwerks mit der eine Stirnradverzahnung 542 aufweisenden Gegenscheibe 54 in Eingriff kommt.

Da die Stirnradverzahnungen 512 und 542 ebenfalls einen identischen Teilkreisdurchmesser aufweisen, behalten die Gegenscheibe 54 und die Scheibe 51 auch nach radialer Trennung und bei beliebigen Drehungen die gleiche Phasenlage, so daß die in der Gegenscheibe 54 ausgebildete Nut 543 und der an der Scheibe 51 ausgebildete Steg 513 stets die gleiche Orientierung aufweisen.

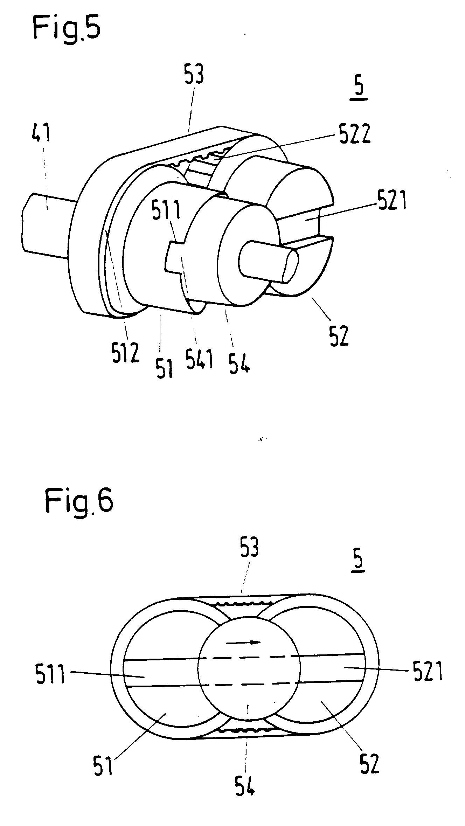

Eine andere bevorzugte Ausführungsform der Kupplung 5 ist in Figur 5 perspektivisch dargestellt. In diesem Ausführungsbeispiel besteht die Kupplung 5 ferner aus einer weiteren ebenfalls eine Nut 521 aufweisenden Scheibe 52. Die Scheibe 52 ist auf einer parallel zur Motorwelle 41 verlaufenden nicht näher dargestellten Drehachse gelagert.

Die beabstandet zueinander angeordneten Scheiben 51 und 52 sind im wesentlichen identisch ausgebildet, das heißt, sie weisen insbesondere den gleichen Außendurchmesser auf. Ferner sind beide Scheiben mit einer Stirnradverzahnung 512 und 522 versehen, die mit einem Zahnriemen 53 kämmen. Der identische Durchmesser der beiden Stirnradverzahnungen 512 und 522 stellt dabei sicher, daß sich die Scheiben 51 und 52 sowohl mit gleicher Drehzahl als auch synchron drehen.

Wie in Figur 6 dargestellt, kann die Gegenscheibe 54 mitsamt dem Greifergetriebe von der Scheibe 51 auf die Scheibe 52 geschoben werden, sofern die darin ausgebildeten Nuten 511 und 512 miteinander fluchten. Ein wesentlicher Vorteil der vorliegenden Erfindung besteht darin, daß die Phasenbeziehung zwischen dem Antriebsmotor und dem Greifergetriebe bei dessen Verschiebung erhalten bleibt. Dies ist insbesondere dann wichtig, wenn beispielsweise der Antriebsmotor auch eine Blende antreibt. Darüber hinaus ist auch hervorzuheben, daß das Greifergetriebe auch bei Verschiebung auf die Scheibe 52 synchron mit dem Antriebsmotor verbunden bleibt. Dies ist vorteilhaft, wenn eine Kamera über die Antriebswelle des verschobenen Greifergetriebes manuell durchgedreht wird.

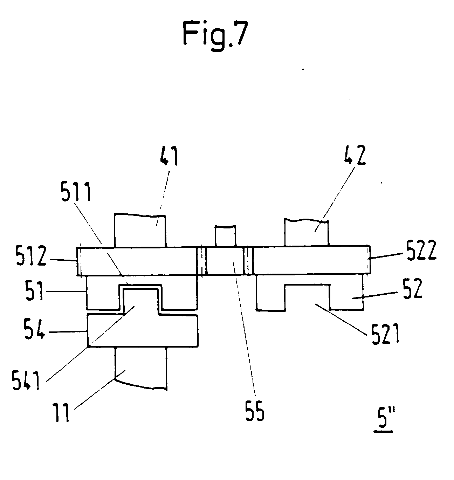

In Figur 7 ist ein weiteres Ausführungsbeispiel einer Kupplung 5" schematisch dargestellt. Die Motorwelle 41 ist wiederum mit einer Scheibe 51 versehen, die eine einfach schrägverzahnte Stirnradverzahnung 512 aufweist. Parallel zur Motorwelle 41 ist eine Achse 42 angeordnet, die eine identisch ausgebildete Scheibe 52 trägt.

Anstelle eines Zahnriemens sind die Scheiben 51 und 52 durch ein mit beiden Scheiben kämmendes Zahnrad 55 gekoppelt, das auf einer parallel zur Motorwelle verlaufenden Achse gelagert ist. Durch diese Kopplung wird erreicht, daß die Nuten 511 und 512 der Scheiben stets die gleiche Winkelorientierung besitzen. Eine Verschiebung der Gegenscheibe 54 mitsamt dem Greifergetriebe ist dabei immer dann möglich, wenn die Nuten 511, 521 der Scheiben 51, 52 miteinander fluchten.

Der radiale Abstand der Scheiben 51 und 52 ist vorzugsweise kleiner als der Durchmesser der Scheiben im Bereich Ihrer jeweiligen Nut. Hierdurch wird sichergestellt, daß bei einer Verschiebung der Gegenscheibe 54 deren Steg 541 erst dann die Nut der einen Scheibe verläßt, wenn sich der Steg 541 bereits im Eingriff mit der Nut der anderen Scheibe befindet.

Der Steg 541 der Gegenscheibe 54 und die in den Scheiben ausgebildeten Nuten 511, 521 weisen vorzugsweise einen rechteckigen Querschnitt auf, so daß, in Abhängigkeit von der Tiefe der Nuten und der axialen Erstreckung des Steges 541, ein axialer Ausgleich zwischen der Motorwelle 41 und der Antriebswelle 11 des Greifergetriebes erfolgen kann.

Anstelle eines einzelnen Zahnrades 55 kann gegebenenfalls auch ein aus mehreren Zahnrädern bestehendes Synchrongetriebe zur Kopplung der Scheiben 51, 52 verwendet werden. Dabei können die Scheiben 51, 52 und das Synchrongetriebe vorzugsweise mit einer Axialkräfte kompensierenden Doppelschrägverzahnung versehen werden. Auch diese Ausführungsform stellt sicher, daß die Nuten 511, 512 der Scheiben 51, 52 stets die gleiche Winkelorientierung besitzen.

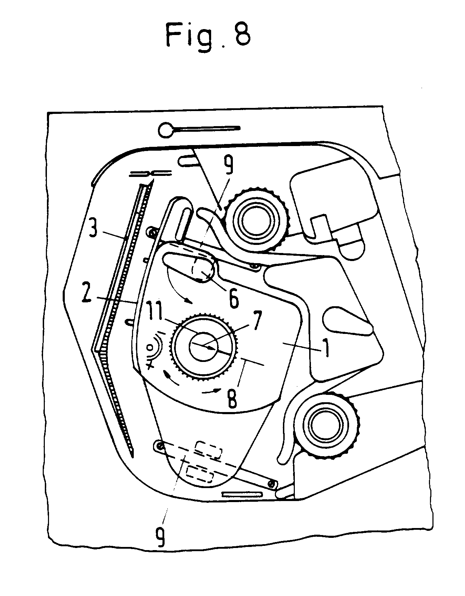

Die Figur 8 zeigt schematisch eine erfindungsgemäße Filmtransportvorrichtung in einem Gehäuse einer Laufbildkamera. Das Greifergetriebe 1 ist mit der daran befestigten Filmkufe 2 relativ zu der äußeren Filmkufe 3 translatorisch in Längsrichtung zweier Führungselemente 9 verschoben, so daß der durch die beiden Filmkufen 2, 3 gebildete Filmkanal zugänglich ist.

Das Greifergetriebe 1 ist mit einer Feststelleinrichtung 6 versehen, mit der das Greifergetriebe 1 sowohl in der Betriebsstellung als auch in einer verschobenen Lage feststellbar ist. Die Feststelleinrichtung 6 weist vorzugsweise eine abgeflachte Kreisscheibe auf, die durch Umlegen eines Hebels mit dem oberen Führungselement 9 reibschlüssig verbindbar ist.

Da das Greifergetriebe nur bei miteinander fluchtenden Nuten verschiebbar ist, ist das der Gegenscheibe gegenüberliegende Ende der Antriebswelle 11 des Greifergetriebes 1 mit einer Markierung 7 versehen, die in Bezug zu einer zweiten, am Greifergetriebe angebrachten Markierung 8, die Winkelorientierung der Gegenscheibe bzw. der Nuten anzeigt.

Die Erfindung beschränkt sich in ihrer Ausführung nicht auf die vorstehend angegebenen bevorzugten Ausführungsbeispiele. Vielmehr ist eine Anzahl von Varianten denkbar, welche von der beanspruchten Lösung auch bei grundsätzlich anders gearteten Ausführungen Gebrauch machen.

## Patentansprüche

1. Filmtransportvorrichtung mit einem Filmkanal (2, 3) und einem relativ zum Filmkanal verschiebbaren Filmschaltwerk (1) und einem Antriebsmotor, dessen Motorwelle (41) mit der Antriebswelle (11) des Filmschaltwerks (1) über eine Kupplung (5) drehstarr verbunden ist, **dadurch gekennzeichnet,** daß die Kupplung (5) komplementäre formschlüssige Elemente (541; 511; 521) aufweist, die eine radial trennbare Verbindung zwischen Motorwelle (41) und Antriebswelle (11) ermöglichen, derart, daß das Filmschaltwerk (1) relativ zum Antriebsmotor (4) radial verschiebbar ist.

2. Filmtransportvorrichtung nach Anspruch 1, **dadurch gekennzeichnet,** daß der Filmkanal aus zwei Filmkufen (2, 3) besteht, wobei eine der Filmkufen (2) fest mit dem Filmschaltwerk (1) verbunden und mit diesem relativ zu der zweiten Filmkufe (3) verschiebbar ist.

3. Filmtransportvorrichtung nach Anspruch 1 oder 2, **dadurch gekennzeichnet,** daß die Kupplung (5) aus mindestens einer Scheibe (51) und einer mit der Antriebswelle (11) des Filmschaltwerks (1) verbundenen Gegenscheibe (54) besteht wobei die mindestens eine Scheibe (51) und/oder die Gegenscheibe (54) mindestens eine Nut (511, 521) und mindestens einen darin formschlüssig einsetzbaren Steg (541) aufweisen.

4. Filmtransportvorrichtung nach Anspruch 3, **dadurch gekennzeichnet,** daß der mindestens eine Steg (541) und die mindestens eine Nut (511, 521) jeweils einen rechteckigen Querschnitt aufweisen.

5. Filmtransportvorrichtung nach Anspruch 3 oder 4, **dadurch gekennzeichnet,** daß die mindestens eine Nut (511) nur in einer Verschieberichtung des Filmschaltwerks (1) offen ist.

6. Filmtransportvorrichtung nach einem der Ansprüche 3 bis 5, **dadurch gekennzeichnet,** daß die Motorwelle (41) und/oder die Scheibe (51) ein Synchrongetriebe (56) antreiben, mit dem die Gegenscheibe (54) in verschobener Lage des Filmschaltwerks (1) in Eingriff kommt.

7. Filmtransportvorrichtung nach einem der Ansprüche 3 bis 5, **dadurch gekennzeichnet,** daß die Kupplung (5) aus zwei fluchtenden, synchron drehenden und jeweils mindestens eine Nut (511, 521) aufweisenden Scheiben (51, 52) und einer mit diesen mittels eines Steges (541) verbindbaren Gegenscheibe (54) besteht, wobei die eine Scheibe (51) mit der Motorwelle (41) und die Gegenscheibe (54) mit der Antriebswelle (11) des Filmschaltwerks (1) verbunden ist, während die andere Scheibe (52) in Verschieberichtung des Filmschaltwerks (1) auf einer parallel zur Motorwelle (41) verlaufenden Drehachse (42) gelagert ist.

8. Filmtransportvorrichtung nach Anspruch 7, **dadurch gekennzeichnet,** daß die Scheiben (51, 52) jeweils eine Stirnradverzahnung (512, 522) aufweisen und durch einen Zahnriemen (53) miteinander gekoppelt sind.

9. Filmtransportvorrichtung nach Anspruch 7, **dadurch gekennzeichnet,** daß die Scheiben (51, 52) jeweils eine Verzahnung aufweisen und durch ein mit beiden Scheiben (51, 52) kämmendes Zahnrad (55) oder ein aus mehreren Zahnrädern bestehendes Synchrongetriebe gekoppelt sind, wobei die Scheiben (51, 52) und das kämmende Zahnrad (55) bzw. die Scheiben (51, 52) und das Synchrongetriebe vorzugsweise schrägverzahnt ausgebildet sind.

10. Filmtransportvorrichtung nach einem der vorangehenden Ansprüche, **gekennzeichnet durch** mindestens eine Feststelleinrichtung (6), mit der das Filmschaltwerk (1) in der Betriebsstellung und/oder in einer verschobenen Lage feststellbar ist und daß die Antriebswelle (11) des Filmschaltwerks (1) an ihrem der Gegenscheibe (54) gegenüberliegenden Ende eine Markierung (7) aufweist, die in Bezug zu einer zweiten, vorzugsweise am Filmschaltwerk (1) vorgesehenen Markierung (8) die Winkelorientierung der Gegenscheibe (54) anzeigt.

## Claims

1. Film transport mechanism with a film channel (2,3) and a film switching mechanism (1) displaceable relative to the film channel, and with a drive motor whose motor shaft (41) is connected rotationally rigid with the drive shaft (11) of the film switching mechanism (1) through a clutch (5), the clutch (5) having complementary positive locking elements (541;511;521) which allow a radially separable connection between motor shaft (41) and drive shaft (11) so that the film switching mechanism (1) can be displaced radially relative to the drive motor (4).

2. Film transport mechanism according to claim 1 characterised in that the film channel consists of two film skids (2,3) wherein one of the film skids (2) is fixedly connected to the film switching mechanism (1) and is displaceable with this relative to the second film skid (3).

3. Film transport mechanism according to claim 1 or 2 characterised in that the clutch (5) consists of at least one disc (51) and a counter disc (54) connected to the drive shaft (11) of the film switching mechanism (1) wherein the at least one disc (51) and/or counter disc (54) has at least one groove (511, 521) and at least one web (541) which can be inserted with keyed engagement therein.

4. Film transport mechanism according to claim 3 characterised in that the at least one web (541) and the at least one groove (511, 521) each have a rectangular cross-section.

5. Film transport mechanism according to claim 3 or 4 characterised in that the at least one groove (511) is only open in a displacement direction of the film switching mechanism (1).

6. Film transport mechanism according to one of claims 3 to 5 characterised in that the motor shaft (41) and/or the disc (51) drive a synchronized gearing (56) with which the counter disc (54) comes into engagement in the displaced position of the film switching mechanism (1).

7. Film transport mechanism according to one of claims 3 to 5 characterised in that the clutch (5) consists of two synchronously rotating discs (51,52) which are in alignment and each have at least one groove (511,521), and of a counter disc (54) which is connectable with the discs by means of a web (541) wherein the one disc (51) is connected to the motor shaft (41) and the counter disc (54) is connected to the drive shaft (11) of the film switching mechanism (1) whilst the other disc (52) is mounted in the displacement direction of the film switching mechanism (1) on an axis of rotation (42) running parallel to the motor shaft (41).

8. Film transport mechanism according to claim 7 characterised in that the discs (51,52) each have a spur gearing (512,522) and are coupled together by a toothed belt (53).

9. Film transport mechanism according to claim 7 characterised in that the discs (51,52) each have teething and are coupled through a gear wheel (55) which meshes with the two discs (51,52) or through a synchronized gearing consisting of several gearwheels wherein the discs (51,52) and the synchronized gearing are preferably formed with inclined teeth.

10. Film transport mechanism according to one of the preceding claims, characterised by at least one fixing device (6) with which the film switching mechanism (1) can be fixed in the operating position and/or in a displaced position and that the drive shaft (11) of the film switching mechanism (1) has at its end opposite the counter disc (54) a marking (7) which in relation to a second marking (8) provided preferably on the film switching mechanism (1) indicates the angular orientation of the counter disc (54).

## Revendications

1. Dispositif de transport de film avec un canal de film (2,3) et un mécanisme d'avance de film (1) déplaçable relativement au canal de film, et un moteur d'entraînement dont l'arbre moteur (41) est relié immobile en rotation à l'arbre d'entraînement (11) du mécanisme d'avance de film (1) par un accouplement (5), caractérisé en ce que l'accouplement (5) présente des éléments complémentaires à concordance de forme (541 ; 511; 521) qui permettent une liaison séparable radialement entre l'arbre du moteur (41) et l'arbre d'entraînement (11) de telle sorte que le mécanisme d'avance de film (1) soit déplaçable radialement relativement au moteur d'entraînement (4).

2. Dispositif de transport de film selon la revendication 1, caractérisé en ce que le canal de film est constitué de deux patins de film (2,3), un patin de film (2) étant relié solidement au mécanisme d'avance de film (1) et étant déplaçable avec celui-ci relativement au deuxième patin de film (3).

3. Dispositif de transport de film selon la revendication 1 ou 2, caractérisé en ce que l'accouplement (5) est constitué au moins d'un disque (51) et d'un contre-disque (54) relié à l'arbre d'entraînement (11) du mécanisme d'avance de film (1) où, au moins un, disque (51) et/ou le contre-disque (54) présentent au moins une rainure (511, 521) et au moins une barrette (541) pouvant être introduite dans celle-ci par concordance des formes.

4. Dispositif de transport de film selon la revendication 3, caractérisé en ce qu'au moins une barette (541) et au moins une rainure (511, 521) ont respectivement une section transversale rectangulaire.

5. Dispositif de transport de film selon la revendication 3 ou 4, caractérisé en ce qu'au moins une rainure (511) est ouverte seulement dans une direction de déplacement du mécanisme d'avance de film (1).

6. Dispositif de transport de film selon l'une des revendications 3 à 5, caractérisé en ce que l'arbre du moteur (41) et/ou le disque (51) entraîne un mécanisme synchrone (56) avec lequel vient en prise le contre-disque (54) dans la position déplacée du mécanisme d'avance de film (1).

7. Dispositif de transport de film selon l'une des revendications 3 à 5, caractérisé en ce que l'accouplement (5) est constitué de deux disques alignés (51, 52) qui tournent d'une manière synchronisée et qui présentent chacun au moins une rainure (511,521) et d'un contre-disque (54) pouvant être relié à ceux-ci au moyen d'une barrette (541), un disque (51) étant relié à l'arbre du moteur (41) et le contre-disque (54) à l'arbre d'entraînement (11) du mécanisme d'avance de film (1), tandis que l'autre disque (52) est logé dans la direction de déplacement du mécanisme d'avance de film (1) sur un axe de rotation (41) s'étendant parallèlement à l'arbre du moteur (41).

8. Dispositif de transport de film selon la revendication 7, caractérisé en ce que les disques (51), (52) présentent respectivement une denture frontale (512, 522) et sont accouplés l'un à l'autre par une courroie dentée (53).

9. Dispositif de transport de film selon la revendication 7, caractérisé en ce que les disques (51, 52) présentent respectivement une denture et sont accouplés par une roue dentée (55) engrenant avec les deux disques (51, 52) ou un mécanisme synchrone constitué de plusieurs roues dentées, les disques (51,52) et la roue dentée engrenante (55) et, respectivement les disques (51,52) et le mécanisme synchrone étant réalisé de préférence avec une denture hélicoïdale.

10. Dispositif de transport de film selon l'une des revendications précédentes, caractérisé par au moins un dispositif d'arrêt (6) au moyen duquel le mécanisme d'avance de film (1) peut être fixé dans une position de fonctionnement et/ou dans un position déplacée, et en ce que l'arbre d'entraînement (11) du mécanisme d'avance de film (1) présente à son extrémité opposée au contre-disque (54) un marquage (7) qui indique relativement à un deuxième marquage (8) prévu de préférence au mécanisme d'avance de film (1) l'orientation angulaire du contre-disque (54).
